(19) Europäisches Patentamt
European Patent Office
Office européen des brevets

(11) EP 1 857 168 A2

(12) EUROPÄISCHE PATENTANMELDUNG

(43) Veröffentlichungstag:
**21.11.2007 Patentblatt 2007/47**

(51) Int Cl.:
***B01D 53/62*** *(2006.01)* ***C01B 31/36*** *(2006.01)*
***C01B 21/068*** *(2006.01)* ***C01F 7/42*** *(2006.01)*

(21) Anmeldenummer: **06022578.6**

(22) Anmeldetag: **29.10.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **10.05.2006 DE 102006021960**

(71) Anmelder: **SINCONO AG**
**6300 Zug (CH)**

(72) Erfinder: **Krass, Florian**
**6353 Weggis (CH)**

(74) Vertreter: **OK pat AG**
**Chamerstrasse 50**
**6300 Zug (CH)**

(54) **Ölhaltige Sande und Schiefer und ihre Gemische als Ausgangssubstanzen zum Binden oder Zerlegen von Kohlenstoffdioxid und Nox, sowie zur Darstellung von kristallinem Silizium und Wasserstoffgas sowie zur Herstellung von Siliziumnitrid, Siliziumcarbid und Silanen**

(57) Die Rohölvorräte sind berechenbar zeitlich begrenzt. Bevor etwa die Autoindustrie, die Luftfahrt, die Waffenindustrie und die Raumfahrt ihre Verbrennungsmaschinen auf Silane umstellen, das bekanntlich den Luftstickstoff in einer heissen Kammer mit verbrennt und dabei atomaren Wasserstoff liefert, muss eine Möglichkeit gefunden werden, von den hohen Erdölpreisen herunterzukommen. Die sehr grossen Vorräte an ölhaltigen Sanden und Schiefern liefern die Voraussetzung dafür. Indem der Kohlenwasserstoff der Mineralien, Primärenergie liefernd, dahingehend in Wasserstoff und Kohlenstoffrückstände zerlegt wird.

EP 1 857 168 A2

## Beschreibung

Diese Anmeldung beansprucht die Priorität der Anmeldung DE 10 2006 021 960.0 mit Titel "Ölhaltige Sande und Schiefer und ihre Gemische als Ausgangssubstanzen zur Darstellung von kristallinem Silizium und Wasserstiffgas sowie zur Herstellung von Siliziumnitrid, Siliziumcarbid und Silanen", die am 10.5.2006 eingereicht wurde.

Kohlenstoffdioxid (meist Kohlendioxid genannt) ist eine chemische Verbindung aus Kohlenstoff und Sauerstoff. Kohlendioxid ist ein farb- und geruchloses Gas. Es ist mit einer geringen Konzentration ein natürlicher Bestandteil der Luft und entsteht in Lebewesen bei der Zellatmung, aber auch bei der Verbrennung von kohlenstoffhaltigen Substanzen unter ausreichendem Sauerstoff. Seit Beginn der Industrialisierung steigt der $CO_2$-Anteil in der Atmosphäre deutlich an. Hauptursache hierfür sind die vom Menschen verursachten - die sogenannten anthropogenen - $CO_2$-Emissionen.

Das Kohlendioxid in der Atmosphäre absorbiert einen Teil der Wärmestrahlung. Diese Eigenschaft macht Kohlendioxid zu einem so genannten Treibhausgas und ist einer der Mitverursacher des Treibhauseffekts.

Neben diesem klimarelevanten Aspekt hat das $CO_2$ aber auch einen negativen Einfluss auf die Gesundheit. Falls $CO_2$ in einer Konzentration im Blut des Menschen vorliegt, die über der physiologischen (im Sinne von natürlichen) Konzentration liegt, kann es zum Beispiel zur Verminderung oder sogar Aufhebung des reflektorischen Atemanreizes führen. $CO_2$ kann aber auch zu Kopfschmerzen und Schwindel, bei höheren Konzentrationen sogar zu beschleunigtem Herzschlag, Blutdruckanstieg, Atemnot und Bewusstlosigkeit führen.

Ausserdem verändert $CO_2$ die Chronobiologie der Pflanzenwelt, die nicht mehr synchron abläuft. Dadurch wird die Stabilität der Nahrungskette gefährdet.

Aus diesen und auch aus anderen Gründen wird zur Zeit in verschiedenste Richtungen geforscht und entwickelt, um einen Weg zu finden, um die anthropogenen $CO_2$-Emissionen zu reduzieren. Besonders im Zusammenhang mit der Energieerzeugung, die häufig durch das Verbrennen fossiler Energieträger, wie Kohle oder Gas, erfolgt, aber auch bei anderen Verbrennungsprozessen, zum Beispiel bei der Müllverbrennung, besteht ein grosser Bedarf zur $CO_2$ Reduktion. Es werden pro Jahr hunderte von Millionen Tonnen $CO_2$ durch solche Prozesse in die Atmosphäre abgegeben.

Die zur Erzeugung von Wärme benötigten Verbrennungsstoffe erzeugen, wie eingangs erläutert, $CO_2$. Bisher ist niemand auf die Idee gekommen, den in ölhaltigen Sanden ($SiO_2$), ölhaltigen Schiefern ($SiO_2$ + $[CO_3]^2$), in Bauxit oder teerhaltigen Sanden oder Schiefern, und anderen Gemischen vorhandenen Sand zu nutzen, um einerseits den $CO_2$ Ausstoss zu reduzieren und um andererseits aus den Produkten eines solchen neuartigen Verfahrens neue Rohstoffe zu gewinnen.

Anstatt natürlich vorkommende Gemische aus Sand und Öl in diesem neuartigen Verfahren einzusetzen, können auch kohlenwasserstoffhaltige industrielle oder natürliche Abfälle, eventuell nach Vermengung mit Sand, eingesetzt werden.

Es ist auch denkbar, statt des Ölanteils natürlichen Asphalt (auch Erdpech genannt) einzusetzen. Besonders bevorzugt ist ein Gemisch aus Asphalt mit reinem Sand oder mit Bauschutt, der Sandanteile enthält.

Es kann aber auch sogenanntes Wasserglas, eine Mischung aus Sand mit Säure oder Lauge, eingesetzt werden, wobei das Wasserglas mit mineralischen Ölen versetzt wird, um den für die Erfindung notwendigen Kohlenwasserstoffanteil zu liefern (Mikroemulsionsverfahren).

Die Vorräte an ölhaltigen Sanden ($SiO_2$) und Schiefern ($SiO_2$ + $[CO_3]^2$) übersteigen bekanntlich die Weltölvorräte um ein Mehrfaches. Die zur Anwendung kommenden technischen Verfahren, Öl und Minerale zu trennen, sind gegenwärtig uneffektiv und zu teuer. Natürlicher Asphalt kommt an mehreren Stellen der Erde vor, wird aber im kommerziellen Massstab zur Zeit hauptsächlich in Trinidad abgebaut.

Sand ist ein natürlich vorkommendes, unverfestigtes Sedimentgestein und kommt in mehr oder weniger großer Konzentration überall auf der Erdoberfläche vor. Ein Großteil der Sandvorkommen besteht aus Quarz (Siliziumdioxid; $SiO_2$).

Aufgabe der vorliegenden Erfindung ist es, solche möglichen Rohstoffe zu benennen und ihre technische Darstellung zu beschreiben. Die beim Verfahren zum Einsatz kommenden chemischen Überlegungen sind dadurch gekennzeichnet, dass sowohl die in den Sanden und Schiefern und anderen Gemischen vorhandenen Kohlenwasserstoffe an einer Reaktion teilnehmen, sowie auch das $SiO_2$ reaktionstechnisch chemisch verändert wird.

1) Aus den ölhaltige Sanden oder den anderen genannten Gemischen, lassen sich durch Verbrennen zusammen mit flüssigem Aluminium oder heissem Aluminium-Staub Aluminiumoxid ($Al_2O_3$) und Silizium (Si) herstellen. Stark vereinfacht dargestellt läuft folgende Reaktion ab:

$$\underline{SiO_2 + Al \rightarrow Si + Al_2O_3}$$

2) Das Mineralöl der Sande wird bei den hohen Temperaturen zu "Leuchtgas" pyrolisiert. Dieses Gasgemisch ist weitgehend frei von CO und $CO_2$, falls beim Verbrennen des Aluminiums zum Beispiel mit einem leichten Wasserstoffüberschuss gearbeitet wird. Das Gasgemisch wird also überwiegend aus Wasserstoff bestehen, der von der

Kohlenstoffkette der Mineralöle stammt. Der Kohlenstoff selbst schlägt sich bei geeigneter Arbeitstemperatur als graphitähnlicher Rückstand nieder Und könnte zum Beispiel als Anode dienen.

3) Die am Ofen bei der thermischen Reaktion des Hauptprozesses frei werdende Wärme kann z.B. als stark komprimierter Wasserdampf die Turbine eines Dynamos antreiben.

4) Die wichtigsten in der Technik zum Einsatz kommenden Keramiken - Siliziumnitrid ($Si_3N_4$: mit seiner diamantähnlichen Härte) und Siliziumcarbid (SiC: mit seiner bemerkenswerten Wärmeleitfähigkeit) - lassen sich bei gleichem Reaktionsstart durch andere Reaktionsbedingungen erreichen, wie sie in Ziffer 5 bis 7 erläutert werden.

5) Bei Bedarf lässt sich das kristalline Silizium (z.B. als Pulver bei geeigneter Temperatur) nach Zündung direkt mit reinem (kaltem) Stickstoff (z.B. Stickstoff aus der Umgebungsluft) zu Siliziumnitrid umsetzen, weil die Reaktion stark exotherm ist. ($Si_3N_4$ ist ein festes Edelgas [Plichta].) Die hierbei anfallende Wärme kann, wie in Ziffer 3 beschrieben, zum Einsatz kommen. Diese Art der Stickstoffgewinnung ist aus der Stahlveredelung mit Propangas bekannt (Propannitrierung).

6) Auch der in Ziffer 2 anfallende kohlenstoffhaltige Rückstand lässt sich exotherm mit dem gewonnenen kristallinen Silizium zu Siliziumcarbid umsetzen.

7) Das zur Verfügung stehende kristalline Silizium ist oberflächenaktiv und könnte katalytisch (z.B. mit Magnesium und/oder Aluminium als Katalysator) mit Wasserstoff behandelt werden, wobei Monosilan entsteht. Dieses Monosilan kann dem Reaktionsraum entnommen werden und an anderer Stelle ein weiteres Mal einer katalytischen Druckreaktion unterzogen werden. Hier lassen sich nach der Gleichung

$$Si + SiH_4 \rightarrow \text{(mit Kat wie Pt o.a.)} \rightarrow Si(SiH_{44}) + SiH_n(SiH_4)_m + Si_nH_m$$

längerkettige Silane darstellen, die sowohl in der Technik der Brennstoffzelle, bei Motoren auf Keramikbasis, als auch bei Scramjetantrieben zur Anwendung kommen können.

Dies ist auch für die Verbrennung von Stickstoff mit Silanen geeignet.

Weitere Einzelheiten und Vorteile der Erfindung werden im Folgenden anhand von Ausführungsbeispielen beschrieben.

Detaillierte Beschreibung

Im Folgenden wird die Erfindung anhand von Beispiel beschrieben. Ein erstes Beispiel bezieht sich auf die Anwendung der Erfindung in einem Kraftwerksbetrieb, um dort den bei der Energiegewinnung anfallenden $CO_2$-Ausstoss zu reduzieren oder ganz zu eliminieren.

Gemäss Erfindung geht es um eine Reihe von gezielt ablaufenden chemischen Reaktionen, bei denen aus den Ausgangsstoffen (auch Edukte oder Reaktanten genannt) neue chemische Verbindungen (Produkte genannt) entstehen. Die erfindungsgemässen Reaktionen des eingangs als Hauptprozesses bezeichneten Verfahrens sind so ausgelegt, dass $CO_2$ in deutlichen Mengen verbraucht und/oder gebunden wird.

Als Ausgangstoff eingesetzt wird in einem ersten Ausführungsbeispiel zum Beispiel Sand, der mit Mineralöl versetzt ist, oder Ölschiefer. Diese Ausgangsstoffe werden einer Reaktionskammer, zum Beispiel in Form eines Nachbrenners oder einer Brennkammer, zugeführt. In diese Kammer wird $CO_2$ eingeblasen. Dieses $CO_2$ kann in dem ersten Ausführungsbeispiel das $CO_2$-Abgas sein, das bei der Energiegewinnung aus fossilen Brennstoffen in grossen Mengen anfällt und bisher in vielen Fällen in die Atmosphäre entweicht. Zusätzlich wird der Kammer (Umgebung-)Luft zugeführt. Anstatt der Umgebungsluft, oder zusätzlich zur Umgebnungsluft kann dem Verfahren Dampf oder hyperkritisches $H_2O$ bei über 407° C zugeführt werden.

Weiterhin ist das Einblasen von Stickstoff an anderer Stelle im Verfahren, respektive der Brennkammer vorzusehen. Ausserdem kommt eine Art Katalysator zum Einsatz. Besonders geeignet ist Aluminium. Unter geeigneten Umgebungsbedingungen findet in der Kammer eine Reduktion statt, die wie folgt stark vereinfacht dargestellt werden kann:

$$\underline{SiO_2 \xrightarrow{red.} Si}$$

Dass heisst, es wird der im Sand oder Schiefer vorhandene Quarzanteil umgewandelt in kristallines Silizium.

Das zum Einsatz kommende Mineralöl der Sande übernimmt die Rolle des Primärenergielieferantens und wird im erfindungsgemässen Verfahren selber pyrolytisch bei Temperaturen über 1000 Grad Celsius weitgehend in Wasserstoff ($H_2$) und eine graphitähnliche Masse zerlegt. Es wird also bei den ablaufenden Reaktionen der Kohlenwasserstoffkette des Mineralöls der Wasserstoff entzogen. Der Wasserstoff kann zum Beispiel in Rohrleitungssysteme der

Erdgasindustrie abgeleitet oder in Wasserstofftanks gespeichert werden.

In einem zweiten Ausführungsbeispiel wird die Erfindung im Zusammenhang mit einem Pyrolyseverfahren der Firma Pyromex AG, Schweiz, angewendet. Die vorliegende Erfindung kann aber auch als Ergänzung oder Alternative zu dem sogenannten Oxyfuel-Verfahren eingesetzt werden. So kann zum Beispiel mittels der vorliegenden Erfindung eine Energie-Kaskaden-Wärmegewinnung nach folgendem Ansatz durchgeführt werden. In Abwandlung des Oxyfuel-Verfahrens wird unter Zugabe von Aluminium, vorzugsweise von flüssigem Aluminium, und unter Verbrennung von Ölsand (statt Öl oder Kohle) mit Sauerstoff ($O_2$) und je nach Bedarf auch Stickstoff ($N_2$) zusätzliche Hitze erzeugt (Wackerunfall). Im Bedarfsfall der Stickstoffkopplung an Siliziumverbindungen wird vorzugsweise die reine Stickstoffatmosphäre aus Umgebungsluft durch (aus der Propannitrierung bekannten) Verbrennung des Sauerstoffanteils der Luft mit propangas erreicht.

Gemäss Erfindung kommt Aluminium (Al) zum Einsatz. Eine wirtschaftliche Gewinnung von Aluminium ist zur Zeit nur aus Bauxit möglich. Bauxit enthält ca. 60 Prozent Aluminiumoxid (Al203), ca. 30 Prozent Eisenoxid (Fe203), Siliziumoxid (Si02) und Wasser. D.h., das Bauxit ist typischerweise stets mit dem Eisenoxid (Fe203) und dem Siliziumoxid (Si02) verunreinigt.

Al2O3 lässt sich wegen der extrem hohen Gitterenergie nicht auf chemischem Wege reduzieren. Technisch gelingt die Herstellung von Aluminium aber durch die Schmelzflusselektrolyse (Kryolith-Tonerde-Verfahren) von Aluminiumoxid Al2O3. Das Al2O3 wird zum Beispiel durch das Bayer-Verfahren gewonnen. Beim Kryolith-Tonerde-Verfahren wird das Aluminiumoxid mit Kryolith (Salz: Na3[AlF6]) geschmolzen und elektrolysiert. Um nicht bei hohen Schmelztemperatur des Aluminiumoxids von 2000°C arbeiten zu müssen, wird das Aluminiumoxid in einer Schmelze von Kryolith gelöst. Im Verfahren liegt damit die Arbeitstemperatur liegt nur bei 940 bis 980°C.

Bei der Schmelzflusselektrolyse entsteht an der Kathode flüssiges Aluminium und an der Anode Sauerstoff. Als Anoden kommen Kohleblöcke (Graphit) zum Einsatz. Dieses Anoden brennen durch den entstehenden Sauerstoff ab und müssen dauern erneuert werden.

Es wird als ein wesentlicher Nachteil des Kryolith-Tonerde-Verfahrens angesehen, dass er wegen der hohen Bindungsenergie des Aluminiums sehr energieaufwändig ist. Problematisch für die Umwelt ist die teilweise stattfindende Bildung und Emission von Fluor.

Beim erfindungsgemässen Verfahren kann das Bauxit dem Verfahren zugefügt werden, um eine Kühlung des Prozesses zu erreichen. Durch das Bauxit kann man die überschüssige Wärmeenergie im System in den Griff bekommen. Dies geschieht analog zu dem Verfahren, wo einer Eisenschmelze in einem Hochofen Eisenschrott zur Kühlung zugeführt wird, wenn die Eisenschmelze zu heiß wird.

Hilfsweise kann Kryolith eingesetzt werden, falls das Verfahren ausser Kontrollen zu geraten droht (siehe Wacker Unfall), um so im Sinne einer Notkühlung die Temperatur im System zu reduzieren.

Ebenso wie Siliciumcarbid ist Siliciumnitrid ein verschleißfester Werkstoff der bei hochbeanspruchten Teilen im Maschinenbau, Turbinenbau, chemischen Apparaturen, Motorenbau eingesetzt werden kann oder wird.

Weitere Details zu den beschriebenen chemischen Abäufen und Energieprozessen sind den folgenden Seiten zu entnehmen.

Quarzsand lässt sich mit flüssigem Aluminium gemäss dem Lehrbuch Holleman-Wiberg exotherm zu Silizium und Aluminiumoxid umsetzen:

3 Si02 + 4 Al (l) → 3 Si + 2 Al2O3 □H = - 618.8 kJ/Mol (exotherm)

Silizium verbrennt mit Stickstoff zu Siliziumnitrid bei 1350°C. Die Reaktion ist wiederum exotherm

T = 1350°C

3 Si + 2 N2 (g) → Si3N4 □H = - 744 kJ/Mol (exotherm)

Silizium reagiert mit Kohlenstoff leicht exotherm zu Siliziumcarbid.

Si + C → SiC □H = - 65.3 kJ/Mol (exotherm)

Andererseits lässt sich Siliziumcarbid direkt aus Sand und Kohlenstoff bei rund 2000°C endotherm gewinnen:

$$T = 2000°C$$

$$SiO2 + 3\,C\,(g) \rightarrow SiC + 2\,CO□H = +\,625{,}3\ kJ/Mol$$

(endotherm)

Um aus dem Nebenprodukt Bauxit resp. Aluminiumoxid Al2O3 wieder Aluminium zurückzugewinnen, elektrolysiert man flüssiges Al2O3 (Schmelzpunkt 2045°C) ohne Kryolithzugabe zu Aluminium und Sauerstoff . Die Reaktion ist stark endotherm und wird zur Kühlung der exothermen Reaktionen herangezogen.

2 Al2O3 (l) → 4 Al (l) + 3 02 (g) □H = +1676,8 kJ/Mol (endotherm)

Herstellung der Silane:

Magnesium reagiert mit Silizium zu Magnesiumsilicid:

2 Mg + Si → Mg2Si

Magnesiumsilicid reagiert mit Salzsäure zu Monosilan SiH4 und Magnesiumchlorid:

Mg2Si + 4 HCl (g) → SiH4 + 2 MgCl2

Dieser Syntheseweg müsste eigentlich auch mit Aluminium funktionieren: Als Zwischenprodukt entsteht demzufolge Aluminiumsilicid Al4Si3.
Höhere Silane sind möglicherweise nur über die Polymerisation von SiCl2 mit SiCl4 und durch anschliessende Umsetzung mit LiAlH4 zugänglich wie die vorangegangene Arbeit dokumentiert.

Herstellung von Siliziumcarbid und Siliziumnitrid aus Oelsand

1. Einleitung und "Formel" für Oelsand

Aus einem Oelsand mit rund 30 Gewichtsprozent Erdöl können über einen mehrstufigen Prozess die keramischen Werkstoffe Siliziumnitrid $Si_3N_4$ und Siliziumcarbid SiC erhalten werden. Um mit dem chemisch sehr komplexen Gemisch verschiedenster Kohlenwasserstoffverbindungen, welches als Erdöl bekannt ist, stöchiometrisch sinnvoll umgehen zu können, wird stellvertretend für das Erdöl die Formel $C_{10}H_{22}$, welche eigentlich für Decan steht, verwendet. Sand ein Stoff, der exakt mit der Formel $SiO_2$ beschrieben wird, steht mit dem darin enthaltenen Erdöl in einem Gewichtsverhältnis von 70% zu 30%. Der Oelsand wird also mit der Formel $SiO_2$ + $C_{10}H_{22}$ in einer groben Näherung beschrieben, wobei $SiO_2$ ein Molekulargewicht von 60 g/Mol und Decan ein Molekulargewicht von 142 g/Mol mitbringt. Nimmt man 100 g Oelsand, so liegen 70 g $SiO_2$ und 30 g "Decan" oder Erdöl vor. Rechnet man die darin enthaltenen Stoffmengen von $SiO_2$ und "Decan" aus, so erhält man für $SiO_2$:

$$n = \frac{70\ g}{60\ g/Mol} \approx 1.167\ Mol\ SiO_2$$

Und für Erdöl:

$$n = \frac{30\ g}{142\ g/Mol} \approx 0.211\ Mol\ C_{10}H_{22}$$

Werden beide Molzahlen mit 5 multipliziert, so erhält man für $SiO_2$ 5.833 Mol und für $C_{10}H_{22}$ 1.056 Mol, was rund 6 Mol $SiO_2$ auf ein mol $C_{10}H_{22}$ ausmacht. Für Oelsand kann deshalb in guter Näherung die Formel 6 $SiO_2$ + "1" $C_{10}H_{22}$ verwendet werden.

2. Syntheseweg

Die Darstellung von Siliziumnitrid $Si_3N_4$ aus Oelsand gestaltet sich wie folgt: Zuerst wird der Oelsand zusammen mit Dichlormethan $CH_2Cl_2$ in einer sauerstofffreien Atmosphäre auf 1000 °C erhitzt. Dabei wechselt Silizium den Bindungspartner und bildet Siliziumtetrachlorid gemäss der Gleichung (I):

$$6\ SiO_2 + C_{10}H_{22} + 12\ CH_2Cl_2 \rightarrow 6\ SiCl_4 + 12\ CO + 10\ CH_4 + 3\ H_2 \qquad (I)$$

In einem zweiten Schritt wird das erhaltene Siliziumchlorid bei Raumtemperatur mit Lithiumaluminiumhydrid hydriert [1], gemäss Gleichung (II).

$$SiCl_4 + LiAlH_4 \rightarrow SiH_4 + LiAlCl_4 \qquad (II)$$

Schliesslich wird das erhaltene Monosilan $SiH_4$ in reinem Stickstoff verbrannt, Gleichung (III):

$$3\ SiH_4 + 4N_2 \rightarrow Si_3N_4 + 4\ NH_3 \qquad (III)$$

Um Siliziumcarbid SiC zu erhalten, könnte man anstelle der energetisch sehr aufwendigen Hochtemperaturreaktion (Gleichung IV), welche bei 2000°C stattfindet, auch einen energetisch günstigeren Reaktionsweg finden.

$$SiO_2 + 3C \rightarrow SiC + 2\ CO \qquad (IV)$$

Dabei geht man erneut von Siliziumtetrachlorid $SiCl_4$ aus, welches aus Gleichung (I) erhalten wird, und setzt es mit Graphit oder Methan um:

$$SiCl_4 + CH_4 \rightarrow SiC + 4\ HCl \qquad (V)$$

Oder:

$$SiCl_4 + 2C \rightarrow SiC + CCl_4 \qquad (VI)$$

3. Stöchiometrische Berechnungen

Wenn von 1 kg Oelsand ausgegangen wird, so sind darin 700 g Siliziumdioxid und 300 g "Decan" enthalten. Umgerechnet in die Stoffmengen ergibt sich für Siliziumdioxid n = 11.67 Mol und für "Decan" n = 2.11 Mol.
Gemäss der Gleichung (I) gelten für die Verbindungen folgende relative Molekulargewichte:

$$6\ SiO_2 + C_{10}H_{22} + 12\ CH_2Cl_2 \rightarrow 6\ SiCl_4 + 12\ CO + 10\ CH_4 + 3\ H_2 \qquad (I)$$

$M_r$: **60** **142** **84** **169.9** **28** **16** **2** g/Mol

Da die Stoffmenge für Siliziumtetrachlorid $SiCl_4$ wegen dem gleichen stöchiometrischen Faktor dieselbe ist, resultiert aus 1 kg Oelsand eine Menge an $SiCl_4$ von:

$$m(SiCl_4) = 11.67\ Mol \cdot 169.9\ g/Mol = \mathbf{1.982\ kg\ SiCl_4}$$

Wegen der doppelten Stoffmenge von CO gegenüber $SiO_2$ resultiert eine Masse an CO von:

$$m(CO) = 2.\ 11.67\ Mol \cdot 28\ g/Mol = \mathbf{653\ g\ CO}$$

Wegen 10-facher Stoffmenge an Methan $CH_4$ gegenüber "Decan" ergibt sich eine Masse an $CH_4$ von:

$$m(CH_4) = 10 \cdot 2.11\ Mol \cdot 16\ g/Mol = \mathbf{338\ g\ CH_4}$$

Wegen der halben Stoffmenge von $H_2$ gegenüber $SiO_2$ resultiert eine Masse an $H_2$ von:

$$m(H_2) = \frac{1}{2} \cdot 11.67\ Mol \cdot 2\ g/Mol = \mathbf{11.67\ g\ H_2}$$

Da bei Gleichung (II) alle stöchiometrischen Faktoren gleich eins sind, gilt weiter:

$$SiCl_4 + LiAlH_4 \rightarrow SiH_4 + LiAlCl_4 \qquad (II)$$

$M_r$: **169.9** **38** **32** **175.8** g/Mol

Damit ist:

$$m(LiAlH_4) = 11.67\ Mol \cdot 38\ g/Mol = \mathbf{443.3\ g\ LiAlH_4}$$

$$m(SiH_4) = 11.67\ Mol \cdot 32\ g/Mol = \mathbf{373.3\ g\ SiH_4}$$

$$m(LiAlCl_4) = 11.67\ Mol \cdot 175.8\ g/Mol = \mathbf{187.5\ kg\ LiAlCl_4}$$

Da bei Gleichung (III) immer noch die anfängliche Stoffmenge des Siliziumdioxids von 11.67 Mol anwesend ist, und die Stoffmenge von $Si_3N_4$ gegenüber derjenigen von $SiH_4$ einen Drittel beträgt, gilt hier:

$$3\ SiH_4 + 4\ N_2 \rightarrow Si_3N_4 + 4\ NH_3 \qquad (III)$$

$M_r$: l **32** **28** **140** **17** g/Mo

$$m(Si_3N_4) = 1/3 \cdot 11.67\ Mol \cdot 140\ g/Mol = \mathbf{544.4\ g\ Si_3N_4}$$

Die Stoffmenge von $N_2$ beträgt 4/3 gegenüber derjenigen von $SiH_4$: daraus berechnet sich für Stickstoff eine Masse von:

$$m(N_2) = 4/3 \cdot 11.67\ Mol \cdot 28\ g/Mol = \mathbf{435.5\ g\ N_2}$$

Auf das Volumen umgerechnet entsprechen diese 435.5 g $N_2$ bei einem Molvolumen von 22.4 Litern: **V = 348.4 Liter $N_2$.**

Auch bei $NH_3$ beträgt die Stoffmenge 4/3 gegenüber derjenigen von $SiH_4$:

$$m(NH_3) = 4/3 \cdot 11.67 \text{ Mol} \cdot 17 \text{ g/Mol} = \mathbf{264.4 \text{ g } NH_3}$$

Auf das Volumen umgerechnet entsprechen diese 264.4 g $NH_3$ bei einem Molvolumen von 22.4 Litern wiederum: **V = 348.4 Liter $NH_3$.**

Für Gleichung (V) gilt schliesslich nochmals die anfängliche Stoffmenge von 11.67 Mol für Siliziumtetrachlorid:

$$SiCl_4 + CH_4 \rightarrow SiC + 4\ HCl \qquad (IV)$$

$M_r$: **169.9** 16 40 36.5 g/Mol

Damit ist:

$$m(SiC) = 11.67 \text{ Mol} \cdot 40 \text{ g/Mol} = \mathbf{466.6 \text{ g } SiC}$$

$$m(CH_4) = 11.67 \text{ Mol} \cdot 16 \text{ g/Mol} = \mathbf{186.7 \text{ g } CH_4}$$

Auf das Volumen umgerechnet entsprechen diese 186.7 g $CH_4$ bei einem Molvolumen von 22.4 Litern: **V = 261.3 Liter $CH_4$.**

$$m(HCl) = 4 \cdot 11.67 \text{ Mol} \cdot 36.5 \text{ g/Mol} = \mathbf{1.703 \text{ kg } HCl}$$

Wenn im Tonnenmassstab gerechnet wird, können die Einheiten g durch kg, kg durch Tonne t und Liter durch $m^3$ ersetzt werden, ohne dass sich an den Zahlenwerten selbst irgendwas ändert.

4. Thermodynamische Berechnungen

Die Daten zur Berechnung der Reaktionsenthalpie oder Wärmetönung ΔH und der Gibbschen freien Enthalpie ΔG stammen aus dem Standardwerk von Landolt und Börnstein [2]. Zur Berechnung von ΔH aus der Standardbildungsenthalpie Δh° der einzelnen Verbindungen gilt der Satz von Hess:

$$\Delta H = \sum n_i \Delta h°_i(\text{Produkte}) - \sum m_i \Delta h°_i(\text{Edukte})$$

wobei $n_i$, $m_i$ die betreffenden stöchiometrischen Faktoren darstellen.
Kommt ein Wert für **$\Delta H < 0$** heraus, so liegt eine **exotherme** Reaktion vor.
Kommt ein Wert für **$\Delta H > 0$** heraus, so liegt eine **endotherme** Reaktion vor.

Zur Berechnung der Entropieänderung ΔS und der Wärmekapazitätsänderung ΔCp gilt ganz analog:

$$\Delta S = \sum n_i \Delta S°_i(\text{Produkte}) - \sum m_i \Delta S°_i(\text{Edukte})$$

$$\Delta C_p = \sum n_i C_{pi}(\text{Produkte}) - \sum m_i C_{pi}(\text{Edukte})$$

wobei $S°_i$ die Standardentropie bei Raumtemperatur (T = 298 K) der Verbindung i kennzeichnet.
Kommt ein Wert für $\Delta$**S < 0** heraus, so liegt eine **Entropieabnahme** vor.
Kommt ein Wert für $\Delta$**S > 0** heraus, so liegt eine **Entropiezunahme** vor.

Ist die Enthalpieänderung nicht bei der Standardtemperatur T von 298 Kelvin gesucht, sondern bei einer anderen Temperatur, so gilt der Satz von Kirchhoff unter dem Aspekt der isobaren Bedingung:

$$\Delta H(T_2) = \Delta H(T_1) + \int_{T_1}^{T_2} \Delta C_p(T)dT \approx \Delta H(T_1) + \Delta C_p(T)(T_2 - T_1)$$

wobei $\Delta Cp$ die molare Aenderung der Wärmekapazität bei konstantem Druck darstellt. Ist die Entropieänderung nicht bei der Standardtemperatur T von 298 Kelvin gesucht, sondern bei einer anderen Temperatur, so gilt analog der Satz von Kirchhoff unter dem Aspekt der isobaren Bedingung:

$$\Delta S(T_2) = \Delta S(T_1) + \int_{T_1}^{T_2} \Delta C_p(T)dT/T \approx \Delta S(T_1) + \Delta C_p(T)\ln(T_2/T_1)$$

Die freie Gibb sche Enthalpie G sagt aus, inwieweit eine Reaktion freiwillig resp. spontan oder unfreiwillig resp. nicht spontan abläuft. Die freie Enthalpieänderung $\Delta G$ wird mit der Formel:

$$\Delta G = \Delta H - T \cdot \Delta S$$

berechnet:
Kommt ein Wert für $\Delta$**G** < **0** heraus, so liegt eine freiwillige, d. h. **exergonische** Reaktion vor.
Kommt ein Wert für $\Delta$**G** > **0** heraus, so liegt eine unfreiwillige, d. h. **endotherme** Reaktion vor.

Für Gleichung (I) gelten folgende thermodynamische Grössen:

$$6\ SiO_2 + C_{10}H_{22} + 12\ CH_2Cl_2 \rightarrow 6\ SiCl_4 + 12\ CO + 10\ CH_4 + 3\ H_2 \qquad (I)$$

| | $SiO_2$ | $C_{10}H_{22}$(g) | $CH_2Cl_2$(g) | $SiCl_4$(g) | CO(g) | $CH_4$(g) | $H_2$ (g) |
|---|---|---|---|---|---|---|---|
| Δh° kJ/mol | -859,3 | -249,7 (g) | -117,1 | -577,4 | -110,5 | -74,85 | 0 |
| S° J/Mol· Kelvin | 42,09 | 540,5 (g) | 270,2 | 331,4 (g) | 197,4 | 186,19 | 130,6 |
| $C_p$ J/ Mol· Kelvin | 44,43 | 243,1 (g) | 51,1 | 90,58 (g) | 29,15 | 35,79 | 28,83 |

Für $\Delta H$ berechnet sich der Wert wie folgt:

$$\Delta H = 6 \cdot (-577{,}4) + 12 \cdot (-110{,}5) + 10 \cdot (-74{,}85) - 6 \cdot (-859{,}3) - (-249{,}7) - 12 \cdot (-117{,}1)$$
kJ/Mol, $\mathbf{\Delta H = + 1271{,}8}$ **kJ/Mol**

Gleichung (I) ist somit eine bei Raumtemperatur **endotherm** verlaufende Reaktion, da $\Delta H > 0$.

Für $\Delta S$ wird folgender Wert erhalten:

$$\Delta S = 6 \cdot 331,4 + 12 \cdot 197,4 + 10 \cdot 186,19 + 3 \cdot 130,6 - 6 \cdot 42,09 - 540,5 - 12 \cdot 270,2 \text{ J/Mol Kelvin}$$

$$\mathbf{\Delta S = + \quad 2575,46 \text{ J/Mol Kelvin}}$$

Die Entropie wird vergrössert, damit wird Gleichung (I) zumindest von der Triebkraft der Entropie her begünstigt, vermutlich nach der Produktseite hin reagieren. Um diese Frage abschliessend zu beantworten, muss die freie Enhalpieänderung $\Delta G$ noch berechnet werden, wobei die Formel

$$\Delta G = \Delta H - T \cdot \Delta S$$

verwendet wird. Für die Temperatur T werden die standardisierten 298 Kelvin eingesetzt. Somit beträgt $\Delta G$ = + 1271,8 kJ/Mol - 298 K 2575,46 J/Mol K = + **504,31 kJ/Mol.**
Bei Raumtemperatur ist die freie Enthalpieänderung $\Delta G$ positiv, was besagt, dass die Reaktion (I) bei dieser Temperatur **endergonisch,** resp. nicht freiwillig abläuft. Die Triebkraft der Entropie genügt also letztlich nicht, die Reaktion auf die Produktseite hin zu verschieben, da der endotherme Beitrag der Wärmetönung dem zu stark entgegenwirkt.
Wie wirkt sich aber eine Temperatursteigerung auf $\Delta H$, $\Delta S$ und $\Delta G$ aus? Dazu wird $\Delta H$(T = 1300 K) und $\Delta S$(T = 1300 K) über die Aenderung der Wärmekapazität $\Delta Cp$ bei isobaren Bedingungen berechnet.

$$\Delta C_p = 6 \cdot 90,58 + 12 \cdot 29,15 + 10 \cdot 35,79 + 3 \cdot 28,83 - 6 \cdot 44,43 - 243,1 - 12 \cdot 51,1 \text{ J/Mol Kelvin}, \mathbf{\Delta C_p = +214.79 \text{ J/Mol Kelvin}}$$

$$\Delta H(T = 1300 \text{ K}) = \Delta H(T = 298 \text{ K}) + \Delta C_p(1300 \text{ K} - 298 \text{ K}) = + 1271,8 \text{ kJ/Mol} + 214.79 \text{ J/Mol} \cdot \text{K} \cdot 1002 \text{ K} \mathbf{= + 1487 \text{ kJ/Mol},}$$

die Reaktion bleibt **endotherm**.

$$\Delta S(T = 1300 \text{ K}) = \Delta S(T = 298 \text{ K}) + \Delta C_p \cdot \ln(1300 \text{ K}/298 \text{ K}) = + 2575,46 \text{ J/Mol K} + 214.79 \text{ J/Mol} \cdot \text{K} \cdot \ln(4,3624) \mathbf{= + 2891,85 \text{ J/Mol} \cdot \text{K}}$$

$$\Delta G(1300K) = \Delta H(1300K) - T \cdot \Delta S(1300K) = + 1487 \text{ kJ/Mol} - 1300K \cdot 2891,85 \text{ J/Mol} \cdot \text{K}$$

$$\mathbf{\Delta G(1300K) = -2272,41 \text{ kJ/Mol},}$$

die Reaktion wird bei 1300 K plötzlich **exergonisch.**
Die Reaktion kann also bei 1300 Kelvin stattfinden.
Für Gleichung (II) gelten folgende thermodynamische Grössen:

$$SiCl_4 + LiAlH_4 \rightarrow SiH_4 + LiAlCl_4 \qquad \text{(II)}$$

| | $SiCl_4$ | $LiAlH_4$ | $SiH_4$ | $LiAlCl_4$ |
|---|---|---|---|---|
| Δh°kJ/mol | -577,4 | -100,8 | -61,0 | -1114,15 |
| S° J/Mol Kelvin | 331,4 (g) | ? | 204,5 | 225,2 |

$$\Delta H = (-61{,}0) + (-1114{,}15) - (-577{,}4) - (-100{,}8)\ \text{kJ/Mol} = \mathbf{-496{,}95\ kJ/Mol}$$

Gleichung (II) ist somit eine **exotherme** Reaktion, da ΔH < 0.
Für ΔS kann der Wert der Entropieänderung nicht ermittelt werden, da die Entropieangabe für $LiAlH_4$ nicht gefunden wurde [2]. Hingegen ist diese Reaktion im *Lehrbuch der Anorganischen Chemie* von *Hollemann-Wiberg* [1] als eine bei Raumtemperatur spontan, resp. **exergonisch** verlaufende beschrieben, was den Hinweis dafür liefert, dass ΔG < 0 sein muss.

Für Gleichung (III) gelten folgende thermodynamische Grössen:

$$3\ SiH_4 + 4\ N_2 \rightarrow Si_3N_4 + 4\ NH_3 \qquad \text{(III)}$$

| | $SiH_4$ | $N_2$ | $Si_3N_4$ | $NH_3$ |
|---|---|---|---|---|
| Δh°kJ/mol | -61,0 | 0 | -750,0 | -46,19 |
| S°J/Mol Kelvin | 204,5 (g) | 191,5 | 95,4 | 192,5 |

$$\Delta H = (-750{,}0) + 4 \cdot (-46{,}19) - 3 \cdot (-61{,}0) - 0\ \text{kJ/Mol} = \mathbf{-751{,}76\ kJ/Mol}$$

Gleichung (III) ist somit eine **exotherme** Reaktion, da ΔH < 0.

Für ΔS wird folgender Wert erhalten:

$$\Delta S = 95{,}4 + 4 \cdot 192{,}5 - 3 \cdot 204{,}5 - 4 \cdot 191{,}5\ \ \text{kJ/Mol Kelvin}$$

$$\mathbf{\Delta S = -514{,}1\ J/Mol\ Kelvin,}$$

das heisst, die Reaktion führt zu einer **Entropiezunahme**.

Mit ΔG = ΔH - T· ΔS wird der Betrag ΔG = - 496,95 kJ/Mol - 298 K · (- 514,1) J/Mol K **= - 598,56 kJ/Mol**

Bei Raumtemperatur ist die freie Enthalpie ΔG somit negativ, was besagt, dass die Reaktion (III) bei dieser Temperatur **exergonisch,** d. h. vollkommen spontan, resp. ganz freiwillig ohne äusseren Zwang abläuft. Bloss wegen der für die Aufbrechung des $N_2$-Moleküls benötigten Aktivierungsenergie muss dennoch eine Zündtemperatur von etwa 900 K gewählt werden, um die Reaktion in Gang zu setzen. Anschliessend unterhält sich die Reaktion von alleine.

Für Gleichung (V) gelten folgende thermodynamische Grössen:

$$SiCl_4 + CH_4 \rightarrow SiC + 4\ HCl \qquad \text{(V)}$$

| | $SiCl_4$ | $CH_4$ | SiC | HCl |
|---|---|---|---|---|
| Δh° kJ/mol | -577,4 | -74,85 | -111,7 | -92,31 |
| S° J/Mol Kelvin | 331,4 (g) | 186,19 | 16,46 | 186,9 |
| $C_p$ J/ Mol Kelvin | 90,58 (g) | 35,79 | 26,65 | 29,12 |

$$\Delta H = (-111{,}7) + 4 \cdot (-92{,}31) - (-577{,}4) - (-74{,}85)\ \text{kJ/Mol} = \mathbf{+171{,}31\ kJ/Mol}$$

Gleichung (V) ist somit eine bei Raumtemperatur endotherm verlaufende Reaktion, da ΔH > 0.
Für ΔS wird folgender Wert erhalten:

$$\Delta S = 16{,}46 + 4 \cdot 186{,}9 - 331{,}4 - 186{,}19 \text{ kJ/Mol Kelvin}$$

$$\mathbf{\Delta S = +\,246{,}47\ J/Mol\ Kelvin,}$$

d.h. eine **Entropiezunahme** findet statt!

Mit ΔG = ΔH - T · ΔS wird der Betrag ΔG = + 171,31 kJ/Mol - 298 K · 246,47 J/Mol K = + **97,86 kJ/Mol** Die Reaktion ist bei Raumtemperatur sowohl **endotherm** (ΔH > 0) als auch **endergonisch** (ΔG > 0). Sie kann somit bei Raumtemperatur nicht ablaufen.

Für ΔCp wird folgender Wert erhalten:

$$\Delta C_p = 26{,}65 + 4 \cdot 29{,}12 - 90{,}58 - 35{,}79 \text{ J/Mol} \cdot \text{Kelvin} = \mathbf{+16{,}76\ J/Mol \cdot Kelvin}$$

$$\Delta H(T = 1300\ K) = \Delta H(T = 298\ K) + \Delta C_p(1300\ K - 298\ K) = +\ 171{,}31\ kJ/Mol + 16.76\ J/Mol \cdot K \cdot 1002\ K = \mathbf{+\ 188{,}1\ kJ/Mol,}$$

die Reaktion bleibt **endotherm**.

$$\Delta S(T = 1300\ K) = \Delta S(T = 298\ K) + \Delta C_p \cdot \ln(1300\ K/298\ K) = +\ 246{,}47\ J/Mol\ K + 16.76\ J/Mol \cdot K \cdot \ln(4{,}3624) = \mathbf{+\ 271{,}16\ J/Mol \cdot K}$$

$$\Delta G(1300K) = \Delta H(1300K) - T \cdot \Delta S(1300K) = +\ 188{,}1\ kJ/Mol - 1300K \cdot 271{,}16\ J/Mol \cdot K$$

$$\mathbf{\Delta G(1300K) = -164{,}4\ kJ/Mol,}$$

die Reaktion wird bei 1300 K plötzlich leicht **exergonisch**.

Die Reaktion kann also bei 1300 Kelvin stattfinden.

Für Gleichung (VI) gelten folgende thermodynamische Grössen:

$$SiCl_4 + 2C \rightarrow SiC + CCl_4 \qquad \text{(VI)}$$

| | $SiCl_4$ | C | SiC | $CCl_4$ |
|---|---|---|---|---|
| Δh° kJ/mol | -577,4 | 0 | -111,7 | -106,7 (g) |
| S° J/Mol Kelvin | 331,4 (g) | 5,74 | 16,46 | 309,7 (g) |
| $C_p$ J/ Mol Kelvin | 90,58 (g) | 8,53 | 26,65 | 83,4 (g) |

$$\Delta H = (-111{,}7) + (-\ 106{,}7) - (-577{,}4) - 0 \text{ kJ/Mol} = \mathbf{+\ 359{,}0\ kJ/Mol}$$

Gleichung (IV) ist somit eine bei Raumtemperatur endotherm verlaufende Reaktion, da ΔH > 0.

Für ΔS wird folgender Wert erhalten:

$$\Delta S = 16{,}46 + 309{,}7 - 331{,}4 - 2 \cdot 5{,}74 \text{ kJ/Mol Kelvin}$$

$$\mathbf{\Delta S = -\ 16{,}72\ J/Mol\ Kelvin,}$$

d.h. eine leichte **Entropiezunahme** findet statt!

Mit $\Delta G = \Delta H - T \cdot \Delta S$ wird der Betrag $\Delta G$ = + 359,0 kJ/Mol - 298 K · (-16,72) J/Mol K = + **364,0 kJ/Mol**
Die Reaktion ist bei Raumtemperatur sowohl **endotherm** ($\Delta H > 0$) als auch **endergonisch** ($\Delta G > 0$). Sie kann somit bei Raumtemperatur nicht ablaufen. Wie sieht es bei einer Temperatur von 1300 Kelvin aus?
Für $\Delta C_p$ wird folgender Wert erhalten:

$$\Delta C_p = 26{,}65 + 83{,}4 - 90{,}58 - 2 \cdot 8{,}53\ \text{J/Mol} \cdot \text{Kelvin} = \mathbf{+2{,}41\ J/Mol \cdot Kelvin}$$

$$\Delta H(T = 1300\ K) = \Delta H(T = 298\ K) + \Delta C_p(1300\ K - 298\ K) = +\,359{,}0\ \text{kJ/Mol} + 2.41\ \text{J/Mol} \cdot \text{K} \cdot 1002\ \text{K} = \mathbf{+\,361{,}4\ kJ/Mol,}$$

die Reaktion bleibt **endotherm**.

$$\Delta S(T = 1300\ K) = \Delta S(T = 298\ K) + \Delta C_p \cdot \ln(1300\ K/298\ K) = -\,16{,}72\ \text{J/Mol Kelvin} + 2.41\ \text{J/Mol} \cdot \text{K} \cdot \ln(4{,}3624) = \mathbf{-\,13{,}17\ J/Mol \cdot K}$$

$$\Delta G(1300K) = \Delta H(1300K) - T \cdot \Delta S(1300K) = +\,361{,}4\ \text{kJ/Mol} - 1300K \cdot (-\,13{,}17\ \text{J/Mol} \cdot \text{K})$$

$$\mathbf{\Delta G(1300K) = +378{,}5\ kJ/Mol,}$$

die Reaktion bleibt auch bei 1300 K **unverändert endergonisch.**
Diese letzte Reaktion veranschaulicht auf demonstrative Weise, dass sich nicht jedes Gleichgewicht mit einer Temperatursteigerung auf die andere Seite verschieben lässt, gelegentlich bleibt alles beim Alten und der vorgeschlagene Reaktionsweg muss verworfen werden. So jedenfalls geschieht dies bei dieser Reaktion.

5. Zusammenfassung

Der unter Kapitel 2 beschriebene Syntheseweg kann mit den vorgeschlagenen Reaktionsgleichungen durchgeführt werden, wenn die entsprechenden thermodynamisch günstigen Temperaturen eingehalten werden, wobei Reaktion (VI) die Ausnahme darstellt, weil sie bei keiner der berechneten Temperaturen stattfinden kann. Damit zeichnet sich ein klarer Syntheseweg für die Darstellung von Siliziumnitrid $Si_3N_4$ und Siliziumcarbid SiC ab, der nachfolgend unter Ergänzung der nötigen Betriebstemperaturen nochmals beschrieben wird. Zuerst wird der Oelsand zusammen mit Dichlormethan $CH_2Cl_2$ in einer sauerstofffreien Atmosphäre auf 1300 Kelvin (1000 °C) erhitzt. Dabei wechselt Silizium den Bindungspartner und bildet Siliziumtetrachlorid gemäss der Gleichung (I):

$$6\ SiO_2 + C_{10}H_{22} + 12\ CH_2Cl_2 \xrightarrow{T = 1300\ K} 6\ SiCl_4 + 12\ CO + 10\ CH_4 + 3\ H_2 \quad \text{(I)}$$

In einem zweiten Schritt wird das erhaltene Siliziumchlorid bei Raumtemperatur mit Lithiumaluminiumhydrid hydriert [1], gemäss Gleichung (II).

$$SiCl_4 + LiAlH_4 \xrightarrow{T = 298\ K} SiH_4 + LiAlCl_4 \quad \text{(II)}$$

Schliesslich wird das erhaltene Monosilan $SiH_4$ in reinem Stickstoff verbrannt, Gleichung (III), wobei die Zündtemperatur wegen der zur Aufbrechung des Stickstoffmoleküls benötigten Aktivierungsenergie schätzungsweise 600 K über der Raumtemperatur liegen muss:

$$3\ SiH_4 + 4\ N_2 \xrightarrow{T \approx 900\ K} Si_3N_4 + 4\ NH_3 \qquad \text{(III)}$$

Um Siliziumcarbid SiC zu erhalten, geht man erneut von Siliziumtetrachlorid $SiCl_4$ aus, welches aus Gleichung (I) erhalten wird, und setzt es mit Methan bei 1300 K um:

$$SiCl_4 + CH_4 \xrightarrow{T = 1300\ K} SiC + 4\ HCl \qquad \text{(V)}$$

Anstelle des bei Gleichung (I) erhaltenen Monosilans können gemäss [1] über Polymerisationsreaktionen von $SiCl_2$ auch höhere Silylchloride und durch die nachfolgende Hydrierung mit $LiAlH_4$ auch höhere Silane erhalten werden, wie die nachfolgenden Reaktionsgleichungen aufzeigen:

$$SiCl_4 + Si \xrightarrow{T = 1250\ °C} 2\ SiCl_2 \qquad \text{(VII)}$$

$$SiCl_4 + SiCl_2 \rightarrow Si_2Cl_6 \qquad \text{(VIII)}$$

$$SiCl_4 + 2\ SiCl_2 \rightarrow Si_3Cl_8 \qquad \text{(IX)}$$

usw.

$$4\ Si_2Cl_6 \rightarrow Si_5Cl_{12} + 3\ SiCl_4 \qquad \text{(X)}$$

$$5\ Si_2Cl_6 \rightarrow Si_6Cl_{14} + 4\ SiCl_4 \qquad \text{(XI)}$$

usw.

$$2\ Si_2Cl_6 + 3\ LiAlH_4 \rightarrow 2\ Si_2H_6 + 3\ LiAlCl_4 \qquad \text{(XII)}$$

$$Si_5Cl_{12} + 3\ LiAlH_4 \rightarrow Si_5H_{12} + 3\ LiAlCl_4 \qquad \text{(XIII)}$$

usw.

Höhere Silane (ab $Si_7H_{16}$) bringen den Vorteil mit sich, dass sie nicht mehr selbstentzündlich sind und sich viel kontrollierter verbrennen lassen als $SiH_4$. Demzufolge ist auch eine Verbrennung mit reinem Stickstoff dann bevorzugt, wenn höhere Silane zu dieser Reaktion gelangen.

6. Literatur

[1] A. F. Hollemann, E. Wiberg, *Lehrbuch der Anorganischen Chemie,* 91-100. Auflage, Walter de Gruyter-Verlag, Berlin, New York, 1985. S. 743, 749 ff.

[2] Landolt-Börnstein, *Zahlenwerte und Funktionen aus der Physik, Chemie, Astronomie, Geophysik und Technik,* II. Band: *Eigenschaften der Materie in ihren Aggregatzuständen,* 4. Teil: *Kalorische Zustandsgrössen,* 6. Auflage, Springer-Verlag.

## Patentansprüche

1. Verfahren zum Umwandeln von gasförmigem $CO_2$ in feste, nichtflüchtige Produkte, wobei das $CO_2$ aus einem industriellen (Verbrennungs-)Prozess oder aus der Umgebungsluft entnommen wird, mit den folgenden Schritten:

   - Einbringen von kohlenwasserstoffhaltiger Siliziumdioxidverbindung (z.B. Ölsand) in eine Brennzone,
   - Erhitzen der Brennzone und Zünden des Kohlenwasserstoffanteils mit Sauerstoff und/oder mittels Pyrolyse (z.B. in einem Induktionsofen),
   - Bereitstellen einer sauerstofffreien Brennzone und Einblasen von gasförmigem Stickstoff,
   - Umwandlung von Siliziumdioxid aus der kohlenwasserstoffhaltigen Siliziumdioxidverbindung mit flüssigem oder pulverförmigem Aluminium, oder mit Halogenverbindungen, in Silizium ($Si_2$) und/oder in Silane,
   - Einblasen des gasförmigen $CO_2$,
   - Kopplung des Kohlenstoffs aus dem gasförmigen $CO_2$ an das Silizium ($Si_2$) und/oder die Silane, um so Siliziumcarbid als festes, nichtflüchtiges Produkt zu erhalten.

2. Verfahren nach Anspruch 1, wobei als weiteres Produkt aus atomarem Wasserstoff des Silans und dem Sauerstoff des $CO_2$ Wasser entsteht.

3. Verfahren nach Anspruch 1 oder 2, wobei zusätzlich gasförmiger Stickstoff eingeblasen wird, der mit dem atomaren Sauerstoff der Silane radikalisiert und gespalten wird.

4. Verfahren nach Anspruch 3, wobei radikalisierter Stickstoff mit dem Silizium aus dem Siliziumdioxid Siliziumnitrid ($Si_3N_4$) bildet.

5. Verfahren nach Anspruch 4, wobei die Reaktion zur Darstellung des Siliziumnitrids ($Si_3N_4$) stark exotherm abläuft und die dabei entstehende Abwärme zur Erzeugung von Strom eingesetzt wird.

6. Verfahren nach Anspruch 5, wobei die dabei entstehende Abwärme in einer benachbarten Zone zum Schmelzen von $Al_2O_3$ (z.B. aus Bauxit) eingesetzt wird.

7. Verfahren nach Anspruch 6, wobei reines Aluminium in einem kryolithfreien Elektrolyseverfahren hergestellt wird.

8. Verfahren nach Anspruch 7, wobei Strom aus dem in Anspruch 5 genannten Verfahren eingesetzt wird.

9. Verfahren nach Anspruch 7, wobei das reine Aluminium in einem Kreislauf zur Reduktion des Siliziumdioxids in einem der Verfahrensschritte des Anspruchs 1 verwendet und dabei in reines $Al_2O_3$ umgewandelt wird.

10. Verfahren nach einem der vorhergehenden Ansprüche, wobei die verschiedenen endothermen und exothermen Reaktionen der verschiedenen Reaktionspartner kaskadenartig ausgeführt werden.

11. Verfahren nach einem der vorhergehenden Ansprüche, wobei einer oder mehrere der gasförmigen oder pulverförmigen oder flüssigen Reaktionspartner mit einem Spin (Zyklonverfahren) in das Verfahren eingeblasen/eingebracht werden, um mindestens einen Teil der in der Brennzone vorhandenen Reaktionspartner in Rotation zu versetzen.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102006021960